# EUROPEAN PATENT SPECIFICATION

(11) **EP 2 479 837 B1**
(45) Date of publication and mention of the grant of the patent: **16.08.2017**
(21) Application number: 11151460.0
(22) Date of filing: 19.01.2011
(51) Int. Cl.: H01P 1/203, H01P 3/08, H01Q 1/24, H01P 1/201, H04B 1/00

(54) **Wireless communications using multi-bandpass transmission line with slot ring resonators on the ground plane**
Funkkommunikationen mit Mehrbandpass-Übertragungsleitung mit Slot-Ring-Resonatoren auf Bodenebene
Communications sans fil utilisant une ligne de transmission à bandes passantes multiples avec des résonateurs à anneau d'encoche dans le plan de base

(43) Date of publication of application: 25.07.2012
(73) Proprietor: BlackBerry Limited, Waterloo, ON N2K 0A7 (CA)
(72) Inventor: Cheng, Dajun, Kanata Ontario K2K 3K1 (CA); Shali, Nitin, Kanata Ontario K2K 3K1 (CA); Sharma, Raman, Kanata Ontario K2K 3K1 (CA)
(74) Representative: Fennell, Gareth Charles

(56) References cited:
- WO-A1-2010/086587
- US-A- 3 753 167
- US-A- 5 426 402
- ALI A ET AL: "Metamaterial Resonator Based Wave Propagation Notch for Ultrawideband Filter Applications", IEEE ANTENNAS AND WIRELESS PROPAGATION LETTERS, IEEE, PISCATAWAY, NJ, US, vol. 7, 1 January 2008 (2008-01-01), pages 210-212, XP011225808, ISSN: 1536-1225

## Description

### Technical Field

The present disclosure relates to the field of communications, and, more particularly, to mobile wireless communications and related methods.

### Background

In the recent fast-developing smartphone industry, multi-radio functionality has become a desired feature to support multi-band radio (e.g. CDMA/GSM Cell band and PCS band), GPS, UMTS, Bluetooth, WiFi, etc. Multi-band components, such as a duplexer, diplexer, tri-plexer, and switches, have been widely used to meet the co-existance requirements of multi-band radio operation, such as out-of-band noise floor and spur, and antenna isolation.

It may be desired to suppress out-of-band emission levels. A typical way to achieve this is to use filters. However, the introduction of a filter would add to the amount of material and associated cost in addition to adding further insertion losses.

Conventional approaches to avoid the use of filter components may include the use of split ring resonators (SRRs) or complementary split ring resonators (CSRRs) such as described in the article "A Novel Wideband Bandpass Filter Based On Complementary Split-Ring Resonator" by X. Lai et al., PIERS, Vol. 1, 177-184, 2008. Also, the article "A New Type of Microstrip Coupler with Complementary Split-Ring Resonator (CSRR)" by K.Y. Liu et al., PIERS Online, VOL. 3, NO. 5, 2007, discusses characteristic impedance of the even mode that can be enhanced by etching a CSRR structure in the ground plane of a microstrip double-line coupler. The equivalent circuit of the filters found in the prior art are of slots for inductance (L) and the coupling between slots for capacitance (C). Such approaches are typically directed to single band operation.

For example, U.S. Patent Application Publication No. 2007/0262834 to Albacete et al. is directed to a bandpass filter including a transmission line. A bandpass filter cell, includes a split-ring resonator, inductive element and capacitive element. The bandpass filter has a frequency response in which at least one passband can be identified. The conductor strip, split-ring resonator, inductive element and capacitive element are dimensioned and arranged so that the bandpass filter, for frequencies within the passband, behaves as a left-handed transmission line for at least one range of frequencies within the passband, and as a right-handed transmission line for at least another range of frequencies within the passband.

It may be desired to have an architecture of a multi-bandpass transmission line for use with commonly used printed circuit board (PCB), and has multi-bandpass characteristics without introducing considerable area and trace loss.
International PCT Publication No. WO 2010/086587, entitled "Multifunctional Antenna", of Peter, H. and Ghanem, F., describes a multifunctional antenna that comprises a radiating element and a microstrip feed line coupled to the radiating element. The microstrip feed line comprises a conductive strip disposed on a first side of a substrate and a ground plane disposed on a second side of the substrate, extending beneath the conductive strip. At least one slot is provided in the ground plane, which extends at least in part beneath the conductive strip. At least one switch is provided in the ground plane and is configured to selectively open and close the at least one slot in the region beneath the conductive strip.
The specification of US Patent Number 5426402, entitled "Preselector Filter with Tunable Narrowband Excision", of Mariani, E., describes a planar preselector filter with tunable narrowband excision composed of a ferrite substrate having a microstrip line with a fixed-tuned bandpass filter on one surface and a plurality of slotline resonators etched in a ground plane on an opposing surface. The fixed tuned bandpass filter is composed of short resonant elements of microstrip, having a length that is one-half the guide wavelength at the center frequency of its passband. The slotline resonators are positioned on the opposing surface of the substrate such that it suppresses or excises a predetermined narrowband of frequencies within the passband of the fixed-tuned bandpass filter. Moreover, the center frequency of the narrowband excision is varied by applying a tunable magnetic bias field of a predetermined strength across the ferrite substrate.
The specification of US Patent Number 3753167, entitled "Slot Line", of Cohn, S. B., relates to a low loss transmission line having a slotted metal deposited or etched on a high permittivity substrate. With various sizes, shapes and configurations of slots, the transmission line may be used as part of components such as hybrid junctions, couplers, filters, mixers, amplifiers, ferrite devices, and resonators. Novel slot/coax and slot/stripline junctions or connections are disclosed as well as novel methods of slot excitation.
The document entitled "Metamaterial Resonator Based Wave Propagation Notch for Ultrawideband Filter Applications" describes a metamaterial resonator based wave propagation notch for ultrawideband (UWB) filter applications. The presented filter combines a conventional bandpass characteristic and negative permittivity metamaterial to establish a UWB response and extra wave propagation notch to reject the HiPerLAN interference, without compromise in performance and size. The negative permittivity metamaterial is made of complementary split ring resonators (CSRRs), etched on the ground plane. In addition a new method is proposed, demonstrating a significant improvement in the matching between the CSRRs and the host transmission line. The measured results show that the filter has an insertion loss less than 1 dB and bandwidth of 8.4 GHz with 22 dB rejection at 5.4 GHz.

### Brief Description of the Drawings

FIGs. 1A-1C are schematic diagrams illustrating an embodiment of a multi-bandpass transmission line and associated slot ring resonators.
FIG. 2 is schematic circuit diagram illustrating an equivalent circuit to the embodiment of the multi-bandpass transmission line and associated slot ring resonators of FIG. 1.
FIG. 3 is a graph illustrating example transmission line characteristics of the embodiment of the multi-bandpass transmission line and associated slot ring resonators of FIG. 1.
FIGs. 4A-4C are schematic diagrams illustrating another embodiment of a multi-bandpass transmission line and associated slot ring resonators.
FIGs. 5A-5C are schematic diagrams illustrating another embodiment of a multi-bandpass transmission line and associated slot ring resonators.
FIGs. 6A-6D are schematic diagrams illustrating another embodiment of a multi-bandpass transmission line and associated slot ring resonators.
FIG. 7 is a schematic block diagram illustrating a multi-band wireless communication device using a multi-bandpass transmission line and associated slot ring resonators in accordance with FIGs. 1 and 4-7.
FIG. 8 is a schematic block diagram illustrating example components that may be used with the mobile wireless communications devices of FIGS. 1 and 4-7.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

Generally, an aspect of the present embodiments is directed to a mobile wireless communications device comprising a printed circuit board (PCB), wireless transceiver circuitry carried by the PCB and operating on a plurality of frequency bands, at least one antenna, and a multi-bandpass transmission line coupling the wireless transceiver circuitry to the at least one antenna. The multi-bandpass transmission line comprising an electrically conductive trace on a surface of the PCB defining a transmission line signal path, and an electrically conductive layer on an opposite surface of said PCB and defining a ground plane. The electrically conductive layer having at least one set of slot rings therein and defining a plurality of slot ring resonators being electromagnetically coupled to the transmission line signal path and operable at the plurality of frequency bands.

The at least one set of slot rings comprises a set of concentric continuous slot rings. Each slot ring of a given set of slot rings defines a respective resonant frequency within a given frequency band.

A pair of electrically conductive traces may be on opposite lateral sides of the transmission line signal path. Also, a dielectric layer may be over the surface of the PCB and covering the electrically conductive trace. A second electrically conductive layer may be on the dielectric layer and defining a second ground plane, and a second electrically conductive layer having at least one set of slot rings therein and defining a plurality of slot ring resonators may be electromagnetically coupled to the transmission line signal path and operable at the plurality of frequency bands.

The at least one set of slot rings may comprise polygonal-shaped slot rings or circular-shaped slot rings, for example. The plurality of slot ring resonators may be aligned with the transmission line signal path at the plurality of frequency bands.

Another aspect of the present embodiments is directed to a Communication method according to claim 8.

The proposed embodiments may differ from conventional approaches by the use of a slot ring for each resonant frequency, each slot ring can be considered as an LC resonator, and by employing concentric slot ring resonators for multiple bandpass RF characteristics, for example. The physical mechanism difference also results in the difference in equivalent circuit. Also, the present embodiments are focused on multi-band operation without increasing the physical dimensions of the embodiment. The design using conventional approaches relies on the coupling between complementary split ring resonator and hard in tuning for multi-band operation, while the proposed embodiments use a slot ring resonator (e.g. a concentric slot-ring resonator) and each slot ring resonator corresponds with one operating frequency facilitating the multi-band operation. Furthermore, a multi-band radio system architecture is also proposed that uses the present multi-bandpass transmission line approach.

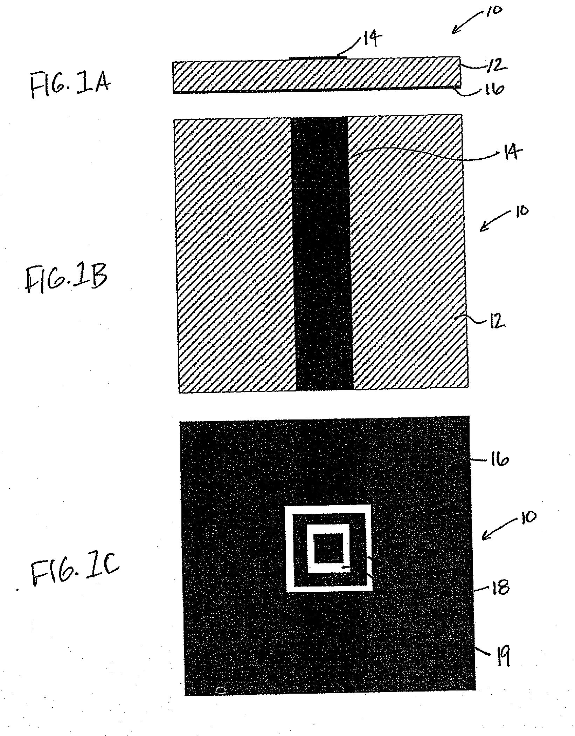

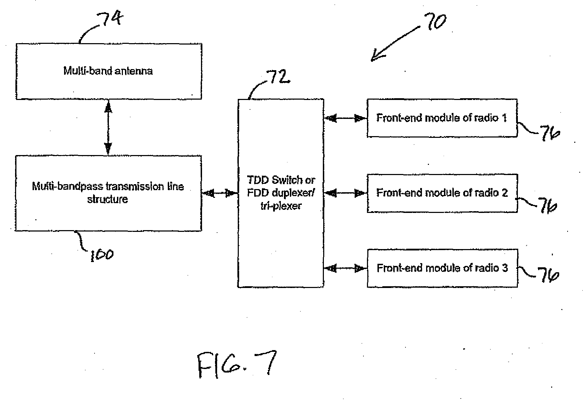

Referring initially to FIGs. 1A-1C and 7, a mobile wireless communications device **70** includes a printed circuit board (PCB) **12,** wireless transceiver circuitry **72** carried by the PCB and operating on a plurality of frequency bands. For example, such wireless transceiver circuitry may include a Time Division Duplex (TDD) switch (e.g. single pull multi-throw switch) or Frequency Division Duplex (FDD) duplexer/triplexer, for example. At least one antenna **74,** for example, a multi-band antenna, may be provided. A multi-bandpass transmission line structure **100** (FIG. 7) couples the wireless transceiver circuitry **72** to the antenna **74.**

Referring more specifically to FIGs. 1A-1C, an embodiment of the multi-bandpass transmission line **10** will be described. A cross-sectional view of the multi-bandpass transmission line **10** is shown in FIG. 1A, a top view is shown in FIG. 1B, and a bottom view is shown in FIG. 1C. An electrically conductive trace is on a surface of the PCB **12,** or dielectric substrate, an defines a transmission line signal path **14.** An electrically conductive layer is on an opposite surface of said PCB **12** and defines a ground plane **16.** The ground plane **16** has at least one set of slot rings **18** therein and defines a plurality of slot ring resonators **19** being electromagnetically coupled to the transmission line signal path **14** and operable at the plurality of frequency bands.

The multi-bandpass transmission line **10** with slot ring resonators **19** etched in the ground plane **16** in accordance with features of the present embodiments may provide an approach to attenuate unwanted signals with little or no extra introduction of insertion loss for the wanted signals, while reducing materials cost, meeting the regulatory emission requirements, and supporting simultaneous multi-radio operation.

The multi-bandpass transmission line **10** uses concentric slot ring resonators **19** on the ground plane. Such concentric rings are designed to share the center point such that the desired multi-band resonance can be achieved at the same time through the electromagnetic coupling between the rings **18** and the transmission line signal path **14.** The dimensions of the rings **18** depend on the ground plane substrate parameters (e.g., thickness, dielectric constant) and the desired operating frequency. For a typical FR-4 substrate, the estimated dimensions of the slot ring resonators may be 3.5mm for cell band (850MHz), 2.7mm for PCS band (1800-1900MHz), 2.4mm for 2100MHz band, and 2mm for 2400MHz ISM band.

Different embodiments are set forth herein. In various embodiments the concentric rings may have a circular shape, for example, implemented in a coplanar waveguide transmission line. In other embodiments the concentric rings may have a square shape, for example, implemented in a microstrip transmission line. The proposed example embodiments feature flexibility in etching and placement on a mobile wireless device or handset ground plane.

Referring again to Fig. 1, the embodiment illustratively includes the multi-bandpass transmission line **14** as a microstrip transmission line. The slot ring resonators **19** are co-located in the ground plane **16,** and would exhibit the multi-bandpass characteristics. In this example, there are two slot ring resonators **19,** an outer one and inner one. These slot ring resonators **19** have the same geometry center point, so that the multi-band desired signals can be resonated in the same coupling spot. For example, the larger slot ring resonator has the lower resonant frequency, while the smaller slot ring resonator has the higher resonant frequency. The transmit or receive signals are electromagnetically coupled to the slot ring resonators **19** etched in the ground plane **16.**

Due to the relatively thin thickness of the substrate (e.g. on the order of 50µm), the coupling between the transmission line **14** and the slot ring resonators **19** may be strong which would result in low insertion loss of the structure. The coupling is frequency-dependent. That is, if the coupling coefficient is defined as the ratio of output power and input power of the multi-bandpass transmission line **10,** it is frequency-dependent due to the frequency response of the resonators **19.** Since each slot ring resonator **19** has a different resonant frequency, multi-bandpass characteristics can be achieved. Thus, the slot ring resonators **19,** etched in the ground plane **16,** may ensure sufficient electromagnetic coupling of multi-band desired signals, while reducing the coupling of unwanted signals in the non-desired frequency bands.

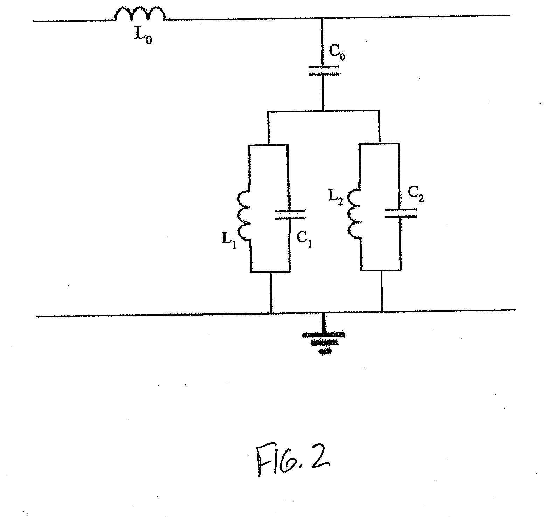

An equivalent circuit of the embodiment of FIG. 1A-1C will be described with reference to FIG. 2. The L0 and C0 are the equivalent inductance and capacitance of the transmission line, L1 and C1 are the equivalent inductance and capacitance of one slot ring resonator **19** (e.g. the outer one), L2 and C2 are the equivalent inductance and capacitance of another slot ring resonator **19** (e.g. the inner one). L1 and C1 correspond to the bandpass frequency f1, L2 and C2 correspond to the bandpass frequency f2, where f1 and f2 are the central frequencies of the wanted signal bands. The inner slot ring resonator corresponds to higher resonating frequency, the outer slot ring corresponds to the lower frequency. For example, fi=1/(2*^{π}*√(Li*Ci)), where i=1, 2.

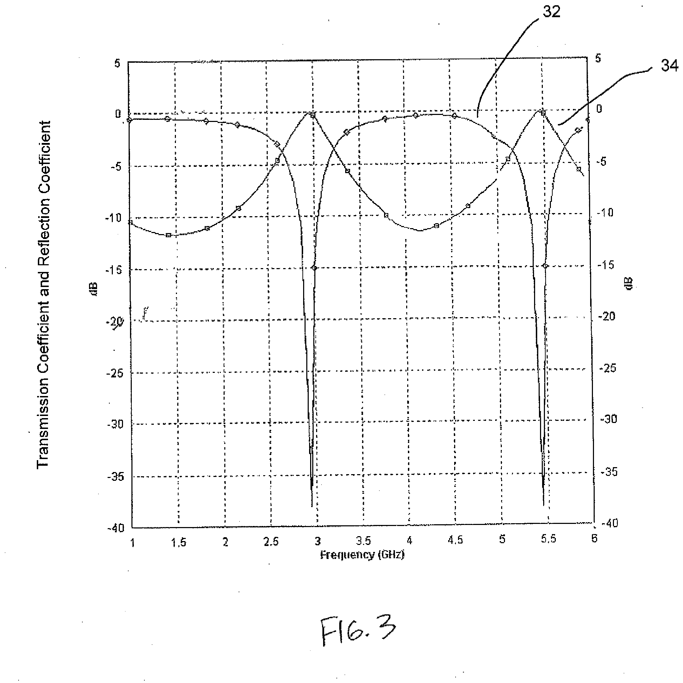

Fig. 3 is a graph illustrating example of transmission characteristics of the multi-bandpass transmission line **14** with two co-located slot ring resonators **19** in the ground plane **16.** In Fig.3, **32** represents the reflection coefficient S11, and **34** is the transmission coefficient S21. The insertion loss, as observed in **34,** shows frequency dependency, and the reflection coefficient **32** also exhibits strong frequency response which is better than -25dB. The strong frequency response of the reflection coefficient **32** is a typical illustration of the RF resonator phenomenon. It is shown that the RF signals only transmit at two wanted frequency bands with less than 0.3dB insertion loss, and would be attenuated at unwanted frequencies.

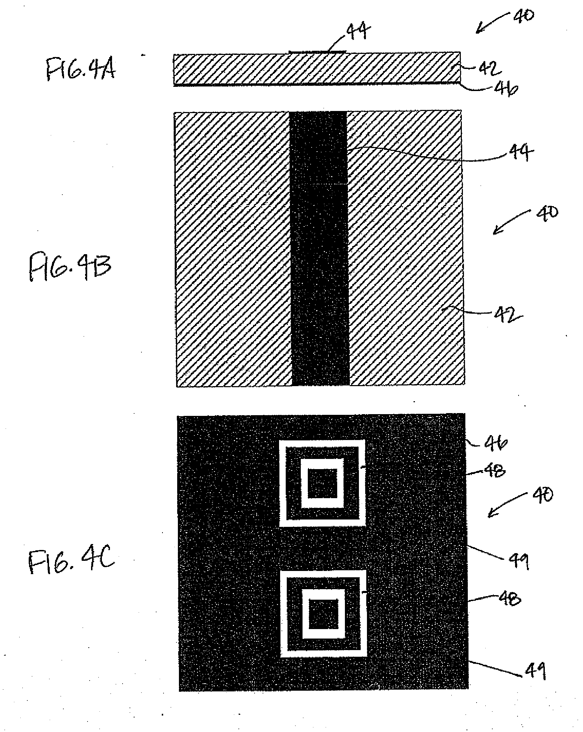

To further improve the attenuation at unwanted frequencies, a multi-stage configuration may be introduced. One embodiment of a two-stage configuration will be described with reference to FIGs. 4A-4C. A cross-sectional view of the multi-bandpass transmission line **40** is shown in FIG. 4A, a top view is shown in FIG. 4B, and a bottom view is shown in FIG. 4C. In the multi-stage configuration, each group of slot ring resonators **49,** defined by the set of slot rings **48** in the ground plane **46,** have the same dimension parameters but are located apart along the transmission line **44** with the PCB **42** therebetween.

The insertion loss of this embodiment could be as low as 0.3dB, and the bandwidth of the 3dB bandpass characteristics may be over 10% which is enough for general wireless standards (e.g., CDMA Cell band, CDMA PCS band, GSM/GPRS/EDGE 800, 900, 1800, 1900, UMTS, WiFi, Bluetooth, GPS).

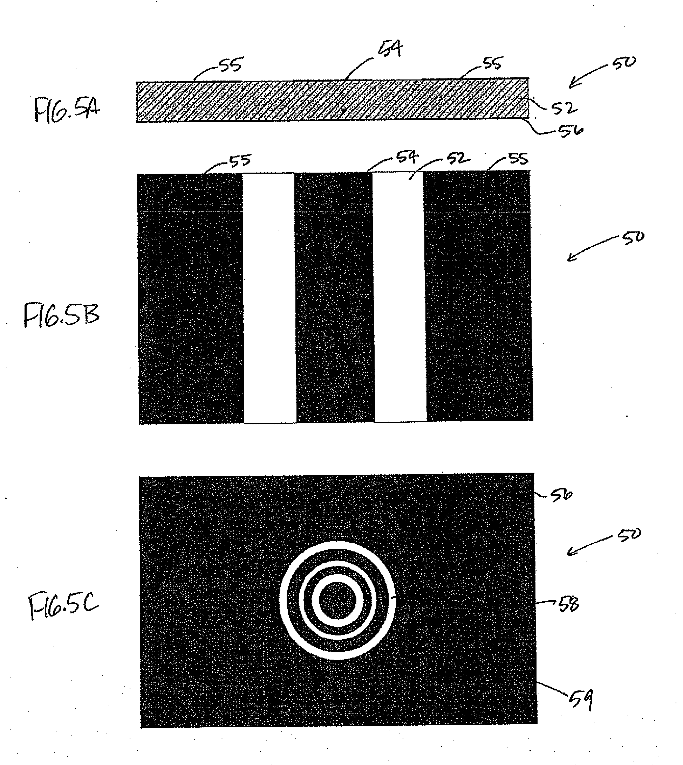

Another embodiment for a multi-bandpass coplanar waveguide transmission line is described with reference to FIGs. 5A-5C. A cross-sectional view of the multi-bandpass transmission line **50** is shown in FIG. 5A, a top view is shown in FIG. 5B, and a bottom view is shown in FIG. 5C. In the coplanar waveguide transmission line configuration, the slot ring resonators **59** are defined by the set of slot rings **58** in the ground plane **56** adjacent the transmission line **54** with the PCB **52** therebetween. The top electrically conductive trace also includes a pair of electrically conductive traces **55** on opposite lateral sides of the transmission line signal path **54.** Three slot ring resonators **59** are etched in the ground plane **56** to implement tri-bandpass transmission characteristics.

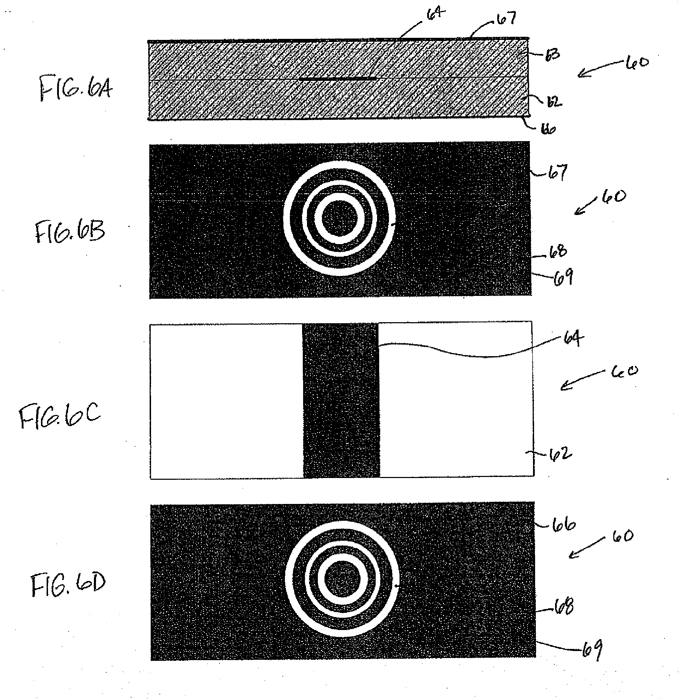

Another embodiment for a multi-bandpass stripline transmission line is described with reference to FIGs. 6A-6D. A cross-sectional view of the multi-bandpass stripline transmission line **60** is shown in FIG. 6A, a top view is shown in FIG. 6B, a top view of the uncovered stripline is shown in FIG. 6C, and a bottom view is shown in FIG. 6D. In the stripline transmission line configuration, the slot ring resonators **69** are defined by the set of slot rings **68** in the lower and upper ground planes **66/67** adjacent the stripline transmission line **64** with the PCB **62** and another dielectric layer **63** therebetween. Three slot ring resonators **69** are etched separately in the two ground planes to implement tri-bandpass transmission characteristics.

Another aspect of the present embodiments is directed to a related method. The method is for making a multi-bandpass transmission line **100,** and includes forming an electrically conductive trace on a surface of the PCB **12** defining a transmission line signal path **14,** and forming an electrically conductive layer on an opposite surface of the PCB **12** and defining a ground plane **16.** The electrically conductive layer is formed with at least one set of slot rings **18** therein and defining a plurality of slot ring resonators **19** being electromagnetically coupled to the transmission line signal path **14** and operable at the plurality of frequency bands.

By way of example, various mobile devices that may be used for the embodiments described herein include portable or mobile telephones, smartphones, tablet computers, etc. Furthermore, control of such a device may be implemented using a combination of hardware (e.g., microprocessor, etc.) and non-transitory computer-readable medium components having computer-executable instructions for performing the various operations described herein. Moreover, although the description may refer to a mobile device, it may be stationary or otherwise intended not to be readily portable.

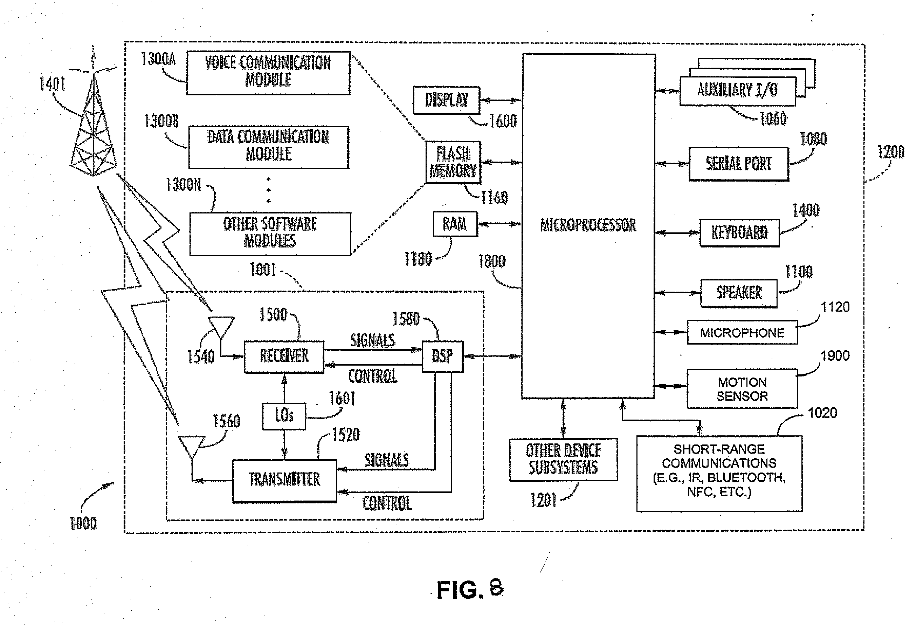

Example components of a mobile wireless communications device **1000** that may be used in accordance with the above-described embodiments are further described below with reference to FIG. 8. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 8. These include a communications subsystem **1001;** a short-range communic2321759v1ations subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (1000) comprising:
a printed circuit board, "PCB" (12, 42, 52, 62);
wireless transceiver circuitry carried by said PCB and operating on a plurality of frequency bands;
at least one antenna (74); and
a multi-bandpass transmission line (10, 40, 50, 60) coupling said wireless transceiver circuitry to said at least one antenna and comprising
an electrically conductive trace on a surface of said PCB defining a transmission line signal path (14), and
an electrically conductive layer on an opposite surface of said PCB and defining a ground plane (16, 46, 56, 66),
said electrically conductive layer having at least one set of slot rings (18, 48, 58, 68) therein and defining a plurality of slot ring resonators (19, 49, 59, 69) being electromagnetically coupled to the transmission line signal path and operable at said plurality of frequency bands, wherein each slot ring of a given set of slot rings defines a respective resonant frequency within a given frequency band **characterized in that** the at least one set of slot rings (18, 48, 58, 68) is of concentric uninterrupted slot rings (18, 48, 58, 68)_{.}

2. The mobile wireless communications device (1000) according to Claim 1 further comprising a pair (55) of electrically conductive traces on opposite lateral sides of said transmission line signal path.

3. The mobile wireless communications device (1000) according to Claim 1 further comprising a dielectric layer (63) over the surface of said PCB (62) and covering the electrically conductive trace.

4. The mobile wireless communications device (1000) according to Claim 3 further comprising:
a second electrically conductive layer on the dielectric layer and defining a second ground plane (67); and
a second electrically conductive layer having at least one other set of slot rings (68) therein and defining another plurality of slot ring resonators (69) being electromagnetically coupled to the transmission line signal path and operable at said plurality of frequency bands.

5. The mobile wireless communications device (1000) according to Claim 1 wherein the at least one set of slot rings comprises polygonal-shaped slot rings.

6. The mobile wireless communications device (1000) according to Claim 1 wherein the at least one set of slot rings comprises circular-shaped slot rings.

7. The mobile wireless communications device (1000) according to Claim 1 wherein said plurality of slot ring resonators are aligned with the transmission line signal path.

8. A method for making a multi-bandpass transmission line (10, 40, 50, 60) and comprising:
forming an electrically conductive trace on a surface of a printed circuit board, "PCB" (12, 42, 52, 62), defining a transmission line signal path (14); and
forming an electrically conductive layer on an opposite surface of the PCB and defining a ground plane (16, 46, 56, 66);
the electrically conductive layer having at least one set of slot rings (18, 48, 58, 68) therein and defining a plurality of slot ring resonators (19, 49, 59, 69) being electromagnetically coupled to the transmission line signal path and operable at the plurality of frequency bands, wherein each slot ring of a given set of slot rings defines a respective resonant frequency within a given frequency band **characterized in that** the at least one set of slot rings (18, 48, 58, 68) is of concentric uninterrupted slot rings (18, 48, 58, 68).

9. The method according to Claim 8 further comprising forming a pair (55) of electrically conductive traces on opposite lateral sides of the transmission line signal path.

## Patentansprüche

1. Mobile drahtlose Kommunikationsvorrichtung (1000), die umfasst:
eine Leiterplatte, "PCB" (12, 42, 52, 62);
eine drahtlose Sendeempfängerschaltung, die durch die PCB getragen wird und die in mehreren Frequenzbändern arbeitet;
mindestens eine Antenne (74); und
eine Multi-Bandpassübertragungsleitung (10, 40, 50, 60), die die drahtlose Sendeempfängerschaltung an die mindestens eine Antenne koppelt und umfasst:
eine elektrisch leitende Bahn auf einer Fläche der PCB, die einen Übertragungsleitungssignalweg (14) definiert, und
eine elektrisch leitende Schicht auf einer gegenüberliegenden Fläche der PCB und die eine Bezugsmasse (16, 46, 56, 66) definiert,
wobei die elektrisch leitende Schicht mindestens eine Gruppe von Schlitzringen (18, 48, 58, 68) in ihr besitzt und mehrere Schlitzringresonatoren (19, 49, 59, 69) definiert, die an den Übertragungsleitungssignalweg elektromagnetisch gekoppelt sind und in den mehreren Frequenzbändern betreibbar sind, wobei jeder Schlitzring einer gegebenen Gruppe von Schlitzringen eine jeweilige Resonanzfrequenz innerhalb eines gegebenen Frequenzbands definiert, **dadurch gekennzeichnet, dass** die mindestens eine Gruppe von Schlitzringen (18, 48, 58, 68) aus konzentrischen, nicht unterbrochenen Schlitzringen (18, 48, 58, 68) besteht.

2. Mobile drahtlose Kommunikationsvorrichtung (1000) nach Anspruch 1, die ferner ein Paar (55) elektrisch leitender Bahnen auf gegenüberliegenden lateralen Seiten des Übertragungsleitungssignalwegs umfasst.

3. Mobile drahtlose Kommunikationsvorrichtung (1000) nach Anspruch 1, die ferner eine dielektrische Schicht (63) über der Fläche der PCB (62), die die elektrisch leitende Bahn bedeckt, umfasst.

4. Mobile drahtlose Kommunikationsvorrichtung (1000) nach Anspruch 3, die ferner umfasst:
eine zweite elektrisch leitende Schicht auf der dielektrischen Schicht, die eine zweite Bezugsmasse (67) definiert; und
eine zweite elektrisch leitende Schicht mit mindestens einer anderen in ihr vorhandenen Gruppe von Schlitzringen (68), die weitere mehrere Schlitzringresonatoren (69) definieren, die an den Übertragungsleitungssignalweg elektromagnetisch gekoppelt sind und in den mehreren Frequenzbändern betreibbar sind.

5. Mobile drahtlose Kommunikationsvorrichtung (1000) nach Anspruch 1, wobei die mindestens eine Gruppe von Schlitzringen polygonal geformte Schlitzringe umfasst.

6. Mobile drahtlose Kommunikationsvorrichtung (1000) nach Anspruch 1, wobei die mindestens eine Gruppe von Schlitzringen kreisförmig geformte Schlitzringe umfasst.

7. Mobile drahtlose Kommunikationsvorrichtung (1000) nach Anspruch 1, wobei die mehreren Schlitzringresonatoren mit dem Übertragungsleitungssignalweg ausgerichtet sind.

8. Verfahren zum Herstellen einer Multi-Bandpassübertragungsleitung (10, 40, 50, 60), das Folgendes umfasst:
Bilden einer elektrisch leitenden Bahn auf einer Fläche einer Leiterplatte, "PCB" (12, 42, 52, 62), die einen Übertragungsleitungssignalweg (14) definiert; und
Bilden einer elektrisch leitenden Schicht auf einer gegenüberliegenden Fläche der PCB, die eine Bezugsmasse (16, 46, 56, 66) definiert;
wobei die elektrisch leitende Schicht mindestens eine in ihr vorhandene Gruppe von Schlitzringen (18, 48, 58, 68) umfasst und mehrere Schlitzringresonatoren (19, 49, 59, 69) definiert, die an den Übertragungsleitungssignalweg elektromagnetisch gekoppelt sind und in den mehreren Frequenzbändern betreibbar sind, wobei jeder Schlitzring einer gegebenen Gruppe von Schlitzringen eine jeweilige Resonanzfrequenz innerhalb eines gegebenen Frequenzbands definiert, **dadurch gekennzeichnet, dass** die mindestens eine Gruppe von Schlitzringen (18, 48, 58, 68) aus konzentrischen, nicht unterbrochenen Schlitzringen (18, 48, 58, 68) besteht.

9. Verfahren nach Anspruch 8, das ferner umfasst, ein Paar (55) elektrisch leitender Bahnen auf gegenüberliegenden lateralen Seiten des Übertragungsleitungssignalwegs zu bilden.

## Revendications

1. Dispositif de communication mobile sans fil (1000) comprenant :
une carte de circuits imprimés, PCB, (12, 42, 52, 62) ;
une circuiterie d'émission-réception sans fil portée par ladite PCB et fonctionnant sur une pluralité de bandes de fréquences ;
au moins une antenne (74) ; et
une ligne d'émission passe-bande multiple (10, 40, 50, 60) couplant ladite circuiterie d'émission-réception sans fil à ladite au moins une antenne et comprenant :
une piste électroconductrice sur une surface de ladite PCB, définissant un trajet de signal de ligne d'émission (14) ; et
une couche électroconductrice sur une surface opposée de ladite PCB, définissant un plan de masse (16, 46, 56, 66) ;
ladite couche électroconductrice possédant au moins un ensemble d'encoches annulaires (18, 48, 58, 68) qui y sont ménagées et qui définissent une pluralité de résonateurs à encoches annulaires (19, 49, 59, 69) qui sont couplés électromagnétiquement au trajet de signal de ligne d'émission et peuvent fonctionner sur ladite pluralité de bandes de fréquences, chaque encoche annulaire, dans un ensemble donné d'encoches annulaires, définissant une fréquence de résonance respective au sein d'une bande de fréquences donnée, **caractérisée en ce que** ledit au moins un ensemble d'encoches annulaires (18, 48, 58, 68) est fait d'encoches annulaires ininterrompues concentriques (18, 48, 58, 68).

2. Dispositif de communication mobile sans fil (1000) selon la revendication 1, comprenant en outre une paire (55) de pistes électroconductrices sur des côtés latéraux opposés dudit trajet de signal de ligne d'émission.

3. Dispositif de communication mobile sans fil (1000) selon la revendication 1, comprenant en outre une couche diélectrique (63) sur la surface de ladite PCB (62) et recouvrant la piste électroconductrice.

4. Dispositif de communication mobile sans fil (1000) selon la revendication 3, comprenant en outre :
une seconde couche électroconductrice sur la couche diélectrique, définissant un second plan de masse (67) ; et
une seconde couche électroconductrice possédant au moins un autre ensemble d'encoches annulaires (68) qui y sont ménagées et qui définissent une autre pluralité de résonateurs à encoche annulaire (69) qui sont couplés électromagnétiquement au trajet de signal de ligne d'émission et peuvent fonctionner sur ladite pluralité de bandes de fréquences.

5. Dispositif de communication mobile sans fil (1000) selon la revendication 1, dans lequel ledit au moins un ensemble d'encoches annulaires est constitué d'encoches annulaires de forme polygonale.

6. Dispositif de communication mobile sans fil (1000) selon la revendication 1, dans lequel ledit au moins un ensemble d'encoches annulaires est constitué d'encoches annulaires de forme circulaire.

7. Dispositif de communication mobile sans fil (1000) selon la revendication 1, dans lequel ladite pluralité de résonateurs à encoche annulaire est alignée sur le trajet de signal de ligne d'émission.

8. Procédé de fabrication d'une ligne d'émission passe-bande multiple (10, 40, 50, 60), comprenant les étapes consistant à :
former une piste électroconductrice à la surface d'une carte de circuits imprimés, PCB, (12, 42, 52, 62), définissant un trajet de signal de ligne d'émission (14) ;
et
former une couche électroconductrice sur une surface opposée de la PCB, définissant un plan de masse (16, 46, 56, 66) ;
ladite couche électroconductrice possédant au moins un ensemble d'encoches annulaires (18, 48, 58, 68) qui y sont ménagées et qui définissent une pluralité de résonateurs à encoches annulaires (19, 49, 59, 69) qui sont couplés électromagnétiquement au trajet de signal de ligne d'émission et peuvent fonctionner sur ladite pluralité de bandes de fréquences, chaque encoche annulaire, dans un ensemble donné d'encoches annulaires, définissant une fréquence de résonance respective au sein d'une bande de fréquences donnée, **caractérisée en ce que** ledit au moins un ensemble d'encoches annulaires (18, 48, 58, 68) est fait d'encoches annulaires ininterrompues concentriques (18, 48, 58, 68).

9. Procédé selon la revendication 8, comprenant en outre l'étape consistant à former une paire (55) de pistes électroconductrices sur des côtés latéraux opposés du trajet de signal de ligne d'émission.
